# EUROPEAN PATENT SPECIFICATION

(11) **EP 3 561 397 B1**
(45) Date of publication and mention of the grant of the patent: **01.07.2020**
(21) Application number: 18382294.9
(22) Date of filing: 27.04.2018
(51) Int. Cl.: F24D 19/00, F28F 9/02, F28F 9/26, F16L 19/02, F16L 25/14, F16L 21/00, F16L 21/02, F28D 21/00, F28D 1/03, F28D 1/053

(54) **CONNECTION DEVICE FOR RADIATOR**
ANSCHLUSSGERÄT FÜR HEIZKÖRPER
DISPOSITIF DE CONNEXION POUR RADIATEUR

(43) Date of publication of application: 30.10.2019
(73) Proprietor: ORKLI, S. COOP., 20240 Ordizia (Gipuzkoa) (ES)
(72) Inventor: RAMOS MAÑERO, Borja, 20240 ORDIZIA (ES)
(74) Representative: Pons Ariño, Angel

(56) References cited:
- EP-A1- 2 693 093
- WO-A1-96/24010
- WO-A1-02/073077
- WO-A1-2013/132030
- GB-A- 2 328 001

## Description

### OBJECT OF THE INVENTION

The present invention relates to a connection device for radiators that allows the radiator-valve and radiator lockshield valve to be joined safely, easily, and quickly, providing improvements in the scope of the installation, maintenance and environment.

The invention falls within the field of hydraulic heating equipment in the household and tertiary sector.

### BACKGROUND OF THE INVENTION

Currently, the heat emitting system that is used most widely around the world is the radiator, in its many possible variations: materials, shapes, applications, and technologies. Heating accounts for 47% of the energy consumption of a home.

Household radiators normally have four access points, two at the top and two at the bottom. The following elements are installed on these accesses:
- Purge valve: this element is used to remove air from the hot water circuit.
- Lockshield valve: closes off and balances the water flow in the heating circuit.
- Valve: regulates the flow of hot water through the radiator for the purpose of achieving the desired temperature.
- Blanking plug: its function is to close off the unused access point.

The following figures have been estimated in the real estate sector and in Europe alone:
- 186 million homes with boilers as the heat source.
- 1.045 million radiators installed.
- 2.090 million valve and lockshield valve connections.
- Replacement rates:
   ∘ 4% boilers
   ∘ 1% radiators
   ∘ 1.3% radiator valves.

The annual result is 69M new radiator installations.

The valve is the most mechanically active element of the assembly, and is most susceptible to substitution, due to replacement, repair, maintenance, and improvement of energy efficiency. It is also the joint, along with the lockshield valve, that requires more elements and sealing points: 2 elements for the purge valve and 3 elements for the lockshield valve and valve.

The joining procedure between a radiator-valve and radiator-lockshield valve currently uses 3 elements:
- a reducing plug for the line, which is the element that adapts the radiator outlet to the size of the thread of the valve or lockshield valve.
- a nut-sleeve joining assembly for connecting to the radiator, which adapts the reducing plug to the valve and lockshield valve, and which comprises at least:
   ∘ a sleeve;
   ∘ a nut intended to be coupled to the sleeve.
   This also normally includes:
   ∘ at least two sealing joints;
   ∘ a ring that improves sealing by compressing the sealing joints;
- a valve or a lockshield valve.

According to the standards, there are no restrictions that must be fulfilled for the connection of the aforementioned elements. In order to achieve sealing, the use of external sealing agents such as teflon, hemp, sealing thread, etc. are required to seal the mechanical differences between the thread and the element. These solutions are temporary and never permanent.

Document EP2693093A1 discloses a connection device for radiators according to the preamble of claim 1.

The connection device for radiators of the present invention resolves all of the aforementioned drawbacks.

### DESCRIPTION OF THE INVENTION

The present invention discloses a connection device for radiators according to claim 1.

Optionally, the connection device for radiators further comprises a nut intended to be coupled to the second end of the reducing plug.

Preferably, the nut intended to be coupled to the second end of the reducing plug is a sliding nut configured to carry out the coupling of the nut to the second end of the reducing plug in a sliding way.

Optionally, the reducing plug further comprises at least one sealing joint configured to prevent leaks between the reducing plug and the valve or the lockshield valve when they are coupled to the nut.

Optionally, the second end of the reducing plug configured to carry out the coupling of a nut comprises a hollow interior part which in turn comprises at least one first stretch with a first diameter and at least one second stretch with a second diameter that is smaller than the first diameter, forming an internal hydraulic reduction.

Preferably, the second stretch of the hollow interior part of the reducing plug is closer to the second end of the reducing plug than the first stretch of the hollow interior part of the reducing plug.

The invention also discloses a kit that comprises the connection device for radiators described above and a valve or a lockshield valve intended to be coupled to the nut.

The invention also relates to an apparatus that comprises a radiator and the aforementioned kit.

This means that the connection device for radiators configured like this allows a valve or a lockshield valve to be joined to a radiator easily and quickly. The device is also compatible for any type of radiator valve or lockshield valve on the market, including the valves that are subject to CEN/CENELEC and UNE-EN 215 certification.

Configured in this manner, the connection device for radiators of the invention presents the following advantages:
- It allows the hydraulic reduction between the radiator-valve and the radiator-lockshield valve in a single element, while the solutions in the state of the art require two elements with two watertight joints.
- Due to the design of the internal hydraulic reduction(s), the load loss is less than with the devices in the state of the art, facilitating improved energy efficiency.
- Economic savings throughout the manufacturing process, because:
   - The nut-sleeve assembly joining to the radiator in the state of the art is an element made of nickel-plated brass. Nickel is a carcinogen and its compounds are listed by the IARC in Group 1. At the environmental level, nickel is released into the air by power plants and incinerators and is absorbed by sediments or particles in the soil and may reach the groundwater. In addition, storage and logistics in each stage of the process is optimized: from the manufacturer to the end user.
   - A watertight seal is created during the installation process. The sealing solutions used with the nut-sleeve assembly joining to the radiator in the state of the art deteriorate with use and over time, and are responsible for most of the problems associated with leaks in heating installations. The installation of the connection device for radiators of the present invention reduces maintenance, repair, and accidents due to leaks by at least one third.
   - The time involved in the installation, maintenance, and replacement of radiator valves or lockshield valves is optimized; costs are reduced throughout the value chain, which could encourage the implementation of improvements in energy efficiency in heating installations as a result of substitution with more efficient valves, with the consequent savings in terms of labor.
- Environmental improvements due to the elimination of the manufacturing process of a nickel-plated brass element with respect to the manufacturing process in the state of the art, and replacing it with sheet metal, which is a recycled material, as a basic option. A significant part of the external sealing process of elements that are highly contaminating and harmful to health is also eliminated, in addition to water savings as a result of the decrease in link in the installation.
- Improved safety in heating installations due to the considerable reduction in the risk of leak accidents. One of three accidents in homes are caused by water leaks, and it is the most expensive accident to repair. They account for between 35-40% of the total amount of real estate according to the ICEA. The device of the present invention eliminates a joining point in the valve and lockshield valve installation, so it reduces repairs and leak accidents by at least one third. Water leaks from radiators are a source of wasted money, energy, and water.
- Maximum compatibility with all of the solutions on the market, at the level of different types of radiators as well as valves: technologies, applications, and aesthetic finishes. The device of the present invention is manufactured according to international standards and sizes. It is compatible with CEN/CENELEC and UNE-EN 215 certification. It complies with the dimensions in the D, F, S and GB series for straight and angled valves for rated pressure of PN<10.

### DESCRIPTION OF THE DRAWINGS

To complement the description that is being provided and in order to provide a better understanding of the characteristics of the invention, in accordance with a preferred practical embodiment of the invention, a set of drawings is included as an integral part of the description, in which the following elements have been represented for the purposes of illustration but not limitation:

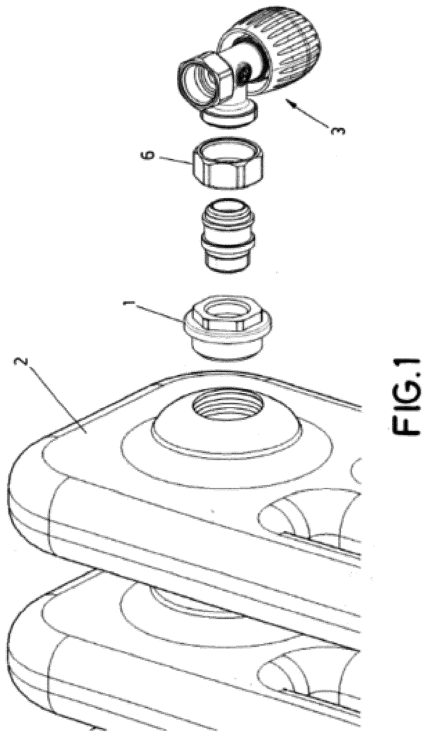

Figure 1 shows an exploded perspective view of a connection device for radiators and for the case in which a valve is coupled, both according to the state of the art.

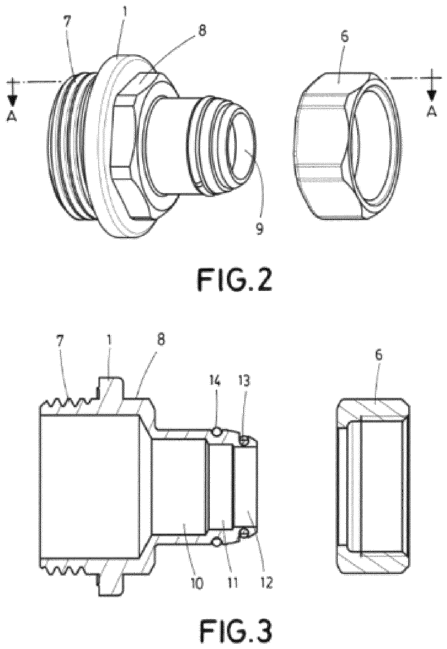

Figure 2 shows an exploded perspective view of the connection device for radiators of the present invention.
Figure 3 shows a cross-sectional view A-A of Figure 2.

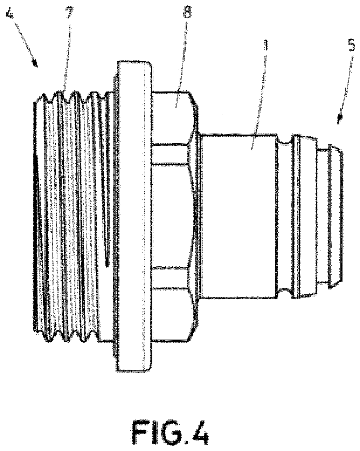

Figure 4 shows an elevation view of the reducing plug of the connection device for radiators of the present invention.

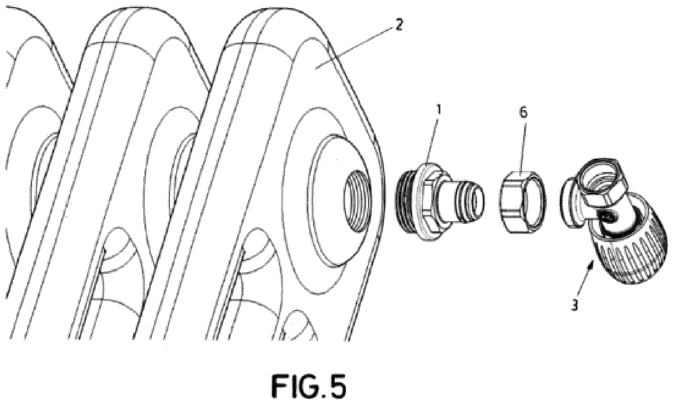

Figure 5 shows an exploded perspective view of the connection device for radiators of the present invention for the case in which a valve is coupled to the connection device.

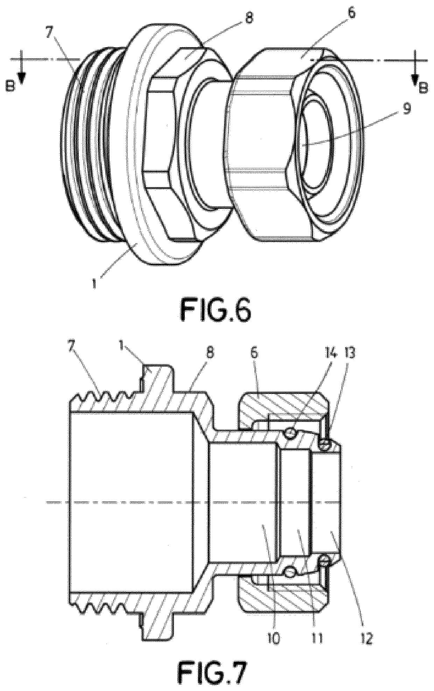

Figure 6 shows a perspective view of the connection device for radiators of the present invention.
Figure 7 shows a cross-sectional view B-B of Figure 6.

### PREFERRED EMBODIMENT OF THE INVENTION

The following section provides a detailed description of the connection device for radiators of the present invention.

The device comprises:
- a reducing plug (1) configured to adapt a radiator outlet (2) to the size of the thread of a valve (3) or a lockshield valve, wherein the reducing plug (1) comprises:
   ∘ a first joining end (4) for joining to the radiator (2);
   ∘ a second end (5) opposite to the first end (4) and configured to carry out the coupling of a nut (6).

Preferably, the reducing plug (1) has a tightening zone (8) with a hexagonal nut shape configured to carry out the tightening on the tightening zone (8) using external tightening means and securing the reducing plug (1) to the radiator (2).

According to the invention, the first end (4) of the reducing plug (1) comprises an external thread (7) configured to join the reducing plug (1) to the radiator (2).

Preferably, the connection device for radiators further comprises a nut (6) that is intended to be coupled to the second end (5) of the reducing plug (1), with the aforementioned nut (6) being a sliding nut (6) that allows it to carry out the coupling of the nut (6) the second end (5) of the reducing plug (1) in a sliding way.

Preferably, the tightening zone (8) with the hexagonal nut shape of the reducing plug (1) and the sliding nut (6) that is intended to be coupled to the second end (5) of the reducing plug (1) have the same external shape.

Preferably, the reducing plug (1) further comprises at least one sealing joint (13) and a retaining system (14) for the sliding nut (6), preferably a ring, which prevents the risk of leaks between the reducing plug (1) and the valve (3) or the lockshield valve when the valve (3) or the lockshield valve is coupled to the sliding nut (6).

Preferably, the second end (5) configured to carry out the coupling of the sliding nut (6) comprises a hollow interior part (9) which in turn comprises a first stretch (10) with a first internal diameter, a second stretch (11) adjacent to the first stretch (10), wherein the second stretch (11) has a second internal diameter smaller than the first internal diameter and a third stretch (12) adjacent to the second stretch (11), wherein the third stretch (12) has a third internal diameter adjacent to the second stretch (11) with the third internal diameter being smaller than the second internal diameter, forming an internal hydraulic reduction, wherein the third stretch (12) is closer to the second end (5) of the reducing plug (1) than the first stretch (10).

The invention relates to a kit that comprises the connection device for radiators described above and a valve (3) or a lockshield valve intended to be coupled to the sliding nut (6).

## Claims

1. A connection device for radiators that comprises:
- a reducing plug (1) configured to adapt a radiator outlet (2) to the size of the thread of a valve (3) or a lockshield valve, wherein the reducing plug (1) comprises a first joining end (4) for joining to the radiator (2);
wherein the reducing plug (1) further comprises a second end (5) configured to carry out the coupling of a nut (6); and
wherein the second end (5) of the reducing plug (1) comprises a hollow interior part (9) which in turn comprises at least one first stretch (10) with a first diameter and at least one second stretch (11) with a second diameter that is smaller than the first diameter;
**characterized in that** the first end (4) for joining to the radiator (2) is larger than the second end (5) and comprises an external thread (7) configured to join the reducing plug (1) to the radiator (2).

2. The connection device for radiators according to claim 1, **characterized in that** it further comprises a nut (6) intended to be coupled to the second end (5) of the reducing plug (1).

3. The connection device for radiators according to claim 2, **characterized in that** the nut (6) intended to be coupled to the second end (5) of the reducing plug (1) is a sliding nut (6) configured to carry out the coupling of the nut (6) to the second end (5) of the reducing plug (1) in a sliding way.

4. The connection device for radiators according to any of the preceding claims, **characterized in that** the reducing plug (1) has a tightening zone (8) with a hexagonal nut shape configured to carry out the tightening on the tightening zone (8) using external tightening means and securing the reducing plug (1) to the radiator (2).

5. The connection device for radiators according to claims 3 and 4, **characterized in that** the tightening zone (8) with a hexagonal nut shape of the reducing plug (1) and the sliding nut (6) intended to be coupled to the second end (5) of the reducing plug (1) have the same external shape.

6. The connection device for radiators according to any of the preceding claims, **characterized in that** the reducing plug (1) further comprises at least one sealing joint (13) configured to prevent leaks between the reducing plug (1) and the valve (3) or the lockshield valve when the valve (3) or the lockshield valve is coupled to the nut.

7. The connection device for radiators according to any of the preceding claims, **characterized in that** the reducing plug (1) further comprises a retaining system (14) for the sliding nut (6), preferably a ring, configured to prevent leaks between the reducing plug (1) and the valve (3) or the lockshield valve when the valve (3) or lockshield valve is coupled to the nut.

8. The connection device for radiators according to claim 1, **characterized in that** the second stretch (11) of the hollow interior part (9) of the reducing plug (1) is closer to the second end (5) of the reducing plug (1) than the first stretch (10) of the hollow interior part (9) of the reducing plug (1).

9. A kit that comprises the connection device for radiators of any of the preceding claims and a valve (3) or a lockshield valve intended to be coupled to the nut (6).

10. An apparatus that comprises a radiator (2) and the kit of claim 9.

## Patentansprüche

1. Anschlussvorrichtung für Heizkörper, die Folgendes umfasst:
- einen Reduzierstopfen (1), der konfiguriert ist, einen Heizkörperauslass (2) an die Größe des Gewindes eines Ventils (3) oder eines Verriegelungsventils anzupassen, wobei der Reduzierstopfen (1) ein erstes Verbindungsende (4) zum Verbinden mit dem Heizkörper (2) umfasst;
wobei der Reduzierstopfen (1) ferner ein zweites Ende (5) umfasst, das konfiguriert ist, die Kopplung einer Mutter (6) durchzuführen; und
wobei das zweite Ende (5) des Reduzierstopfens (1) eine hohles Innenteil (9) umfasst, das seinerseits mindestens eine erste Ausdehnung (10) mit einem ersten Durchmesser und mindestens eine zweite Ausdehnung (11) mit einem zweiten Durchmesser umfasst, der kleiner als der erste Durchmesser ist; **dadurch gekennzeichnet, dass** das erste Ende (4) zum Verbinden mit dem Heizkörper (2) größer als das zweite Ende (5) ist und ein Außengewinde (7) umfasst, das konfiguriert ist, den Reduzierstopfen (1) mit dem Heizkörper (2) zu verbinden.

2. Anschlussvorrichtung für Heizkörper nach Anspruch 1, **dadurch gekennzeichnet, dass** sie ferner eine Mutter (6) umfasst, die zum Koppeln mit dem zweiten Ende (5) des Reduzierstopfens (1) vorgesehen ist.

3. Anschlussvorrichtung für Heizkörper nach Anspruch 2, **dadurch gekennzeichnet, dass** die Mutter (6), die zum Koppeln mit dem zweiten Ende (5) des Reduzierstopfens (1) vorgesehen ist, eine Gleitmutter (6) ist, die konfiguriert ist, die Kopplung der Mutter (6) mit dem zweiten Ende (5) des Reduzierstopfens (1) gleitend durchzuführen.

4. Anschlussvorrichtung für Heizkörper nach einem der vorhergehenden Ansprüche, **dadurch gekennzeichnet, dass** der Reduzierstopfen (1) eine Anziehzone (8) mit einer Sechskantmutterform aufweist, die konfiguriert ist, das Anziehen an der Anziehzone (8) unter Verwendung externer Anziehmittel durchzuführen und den Reduzierstopfen (1) am Heizkörper (2) zu sichern.

5. Anschlussvorrichtung für Heizkörper nach Anspruch 3 und 4, **dadurch gekennzeichnet, dass** die Anziehzone (8) mit einer Sechskantmutterform des Reduzierstopfens (1) und die Gleitmutter (6), die zum Koppeln mit dem zweiten Ende (5) des Reduzierstopfens (1) vorgesehen ist, die gleiche äußere Form aufweisen.

6. Anschlussvorrichtung für Heizkörper nach einem der vorhergehenden Ansprüche, **dadurch gekennzeichnet, dass** der Reduzierstopfen (1) ferner mindestens eine Dichtungsverbindung (13) umfasst, die konfiguriert ist, Undichtigkeiten zwischen dem Reduzierstopfen (1) und dem Ventil (3) oder dem Verriegelungsventil zu verhindern, wenn das Ventil (3) oder das Verriegelungsventil mit der Mutter gekoppelt ist.

7. Anschlussvorrichtung für Heizkörper nach einem der vorhergehenden Ansprüche, **dadurch gekennzeichnet, dass** der Reduzierstopfen (1) ferner mindestens ein Rückhaltesystem (14) für die Gleitmutter (6), vorzugsweise einen Ring umfasst, der konfiguriert ist, Undichtigkeiten zwischen dem Reduzierstopfen (1) und dem Ventil (3) oder dem Verriegelungsventil zu verhindern, wenn das Ventil (3) oder das Verriegelungsventil mit der Mutter gekoppelt ist.

8. Anschlussvorrichtung für Heizkörper nach Anspruch 1, **dadurch gekennzeichnet, dass** die zweite Ausdehnung (11) des hohlen Innenteils (9) des Reduzierstopfens (1) näher am zweiten Ende (5) des Reduzierstopfens (1) liegt als die erste Ausdehnung (10) des hohlen Innenteil (9) des Reduzierstopfens (1).

9. Kit, das die Verbindungsvorrichtung für Heizkörper nach einem der vorhergehenden Ansprüche und ein Ventil (3) oder ein Verriegelungsventil umfasst, das zur Verbindung mit der Mutter (6) vorgesehen ist.

10. Gerät, das einen Heizkörper (2) und das Kit nach Anspruch 9 umfasst.

## Revendications

1. Dispositif de raccordement pour radiateurs qui comprend :
- un bouchon réducteur (1) configuré pour adapter une sortie de radiateur (2) à la taille du filetage d'une vanne (3) ou d'une vanne de verrouillage, dans lequel le bouchon réducteur (1) comprend une première extrémité de jonction (4) pour la jonction au radiateur (2) ;
dans lequel le bouchon réducteur (1) comprend en outre une deuxième extrémité (5) configurée pour effectuer le couplage d'un écrou (6) ; et
dans lequel la deuxième extrémité (5) du bouchon réducteur (1) comprend une partie intérieure creuse (9) qui à son tour comprend au moins un premier tronçon (10) avec un premier diamètre et au moins un deuxième tronçon (11) avec un deuxième diamètre qui est plus petit que le premier diamètre ; **caractérisé en ce que** la première extrémité (4) pour la jonction au radiateur (2) est plus grande que la deuxième extrémité (5) et comprend un filetage externe (7) configuré pour joindre le bouchon réducteur (1) au radiateur (2).

2. Dispositif de raccordement pour radiateurs selon la revendication 1, **caractérisé en ce qu'**il comprend en outre un écrou (6) destiné à être couplé à la deuxième extrémité (5) du bouchon réducteur (1).

3. Dispositif de raccordement pour radiateurs selon la revendication 2, **caractérisé en ce que** l'écrou (6) destiné à être couplé à la deuxième extrémité (5) du bouchon réducteur (1) est un écrou coulissant (6) configuré pour effectuer le couplage de l'écrou (6) à la deuxième extrémité (5) du bouchon réducteur (1) de manière coulissante.

4. Dispositif de raccordement pour radiateurs selon l'une quelconque des revendications précédentes, **caractérisé en ce que** le bouchon réducteur (1) a une zone de serrage (8) avec une forme d'écrou hexagonal configurée pour effectuer le serrage sur la zone de serrage (8) en utilisant des moyens de serrage externes et en fixant le bouchon réducteur (1) au radiateur (2).

5. Dispositif de raccordement pour radiateurs selon les revendications 3 et 4, **caractérisé en ce que** la zone de serrage (8) avec une forme d'écrou hexagonal du bouchon réducteur (1) et l'écrou coulissant (6) destiné à être couplé à la deuxième extrémité (5) du bouchon réducteur (1) ont la même forme externe.

6. Dispositif de raccordement pour radiateurs selon l'une quelconque des revendications précédentes, **caractérisé en ce que** le bouchon réducteur (1) comprend en outre au moins un joint d'étanchéité (13) configuré pour prévenir les fuites entre le bouchon réducteur (1) et la vanne (3) ou la vanne de verrouillage lorsque la vanne (3) ou la vanne de verrouillage est couplée à l'écrou.

7. Dispositif de raccordement pour radiateurs selon l'une quelconque des revendications précédentes, **caractérisé en ce que** le bouchon réducteur (1) comprend en outre un système de retenue (14) pour l'écrou coulissant (6), de préférence une bague, configuré pour prévenir les fuites entre le bouchon réducteur (1) et la vanne (3) ou la vanne de verrouillage lorsque la vanne (3) ou la vanne de verrouillage est couplée à l'écrou.

8. Dispositif de raccordement pour radiateurs selon la revendication 1, **caractérisé en ce que** le deuxième tronçon (11) de la partie intérieure creuse (9) du bouchon réducteur (1) est plus proche de la deuxième extrémité (5) du bouchon réducteur (1) que le premier tronçon (10) de la partie intérieure creuse (9) du bouchon réducteur (1).

9. Kit qui comprend le dispositif de raccordement pour radiateurs de l'une quelconque des revendications précédentes et une vanne (3) ou une vanne de verrouillage destinée à être couplée à l'écrou (6).

10. Appareil qui comprend un radiateur (2) et le kit de la revendication 9.
